Europäisches Patentamt

European Patent Office

Office européen des brevets

(11) Veröffentlichungsnummer: **0 187 359**
A2

## (12) EUROPÄISCHE PATENTANMELDUNG

(21) Anmeldenummer: 85116396.4

(22) Anmeldetag: 20.12.85

(51) Int. Cl.⁴: **B 29 C 47/22**
**B 29 C 33/30**

(30) Priorität: 11.01.85 DE 3500749

(43) Veröffentlichungstag der Anmeldung:
16.07.86 Patentblatt 86/29

(84) Benannte Vertragsstaaten:
CH FR GB LI NL

(71) Anmelder: Münchow und Hühne
Maschinenbaugesellschaft mbH
Am Weissen Stein 9
D-4100 Duisburg 18(DE)

(72) Erfinder: Münchow, Karl
Tannengrund 37
D-4220 Dinslaken(DE)

(72) Erfinder: Hühne, Siegmar
Waldstrasse 17a
D-4230 Wesel-Flüren(DE)

(74) Vertreter: Masch, Karl Gerhard et al,
Patentanwälte Andrejewski, Honke & Partner
Theaterplatz 3 Postfach 10 02 54
D-4300 Essen 1(DE)

(54) Form zum Herstellen quaderförmiger Schaumstoffblöcke.

(57) Eine Form zum Herstellen quaderförmiger Schaumstoffblöcke besteht aus einem Formboden (1), zwei Längsseitenwänden (2, 3), zwei Stirnwänden (4, 5) und einer Formdecke (6). Der Formboden (1) weist Abmessungen auf, die der Formdecke (6) im wesentlichen entsprechen. Außerdem ist der Formboden (1) zwischen den Längsseitenwänden (2, 3) begrenzt höhenverstellbar. Um den Schaumstoffverschnitt so klein wie möglich zu halten, ist sowohl die Höhe als auch die Länge der herzustellenden Schaumstoffblöcke einstellbar. Hierzu ist eine der beiden Stirnwände (4) zwischen den beiden Längsseitenwänden (2, 3), dem Formboden (1) sowie der Formdecke (6) längsverstellbar und aus einer höchstens die Mindeststirnwandfläche aufweisenden oberen Basiswandung (7) sowie einem höhenverstellbaren unteren Ausgleichswandungsteil (8) aufgebaut.

Fig.1

EP 0 187 359 A2

- 1 -

## Form zum Herstellen quaderförmiger Schaumstoffblöcke

Die Erfindung betrifft eine dem Oberbegriff des Patentanspruches 1 entsprechende Form zum Herstellen quaderförmiger Schaumstoffblöcke, insbesondere aus vorgeschäumten Polystyrolteilchen mit Wasserdampf.

Bei aus der Praxis bekannten, druckschriftlich nicht näher belegten Dampfstoßformen dieser Art kann nur der Formboden parallel zu sich selber verstellt, d. h. die Höhe der herzustellenden Schaumstoffblöcke, geändert werden. Bei anderen aus der Praxis bekannten, ebenfalls druckschriftlich nicht näher belegten Dampfstoßformen kann nur die Länge der Schaumstoffblöcke durch Verstellung einer der beiden Stirnwände eingestellt werden.

Der Erfindung liegt die Aufgabe zugrunde, eine Form zu entwickeln, bei der sowohl die Höhe als auch die Länge der herzustellenden Schaumstoffblöcke einstellbar ist, um so den Schaumstoffverschnitt so klein wie möglich zu halten.

Die Erfindung löst diese Aufgabe bei einer Form der eingangs genannten Art durch die im Kennzeichen des Patentanspruches 1 angegebenen Merkmale.

Die Erfindung geht dabei von der Erkenntnis aus, daß diese ohne weiteres nicht zu verwirklichende Vereinigung der eingangs geschilderten, für sich bekannten Maßnahmen durch den genannten Aufbau der längsverstellbaren Stirnwand aus Basiswandung und Ausgleichswandungsteil auf konstruktiv besonders einfache Art und Weise ermöglicht werden kann.

Für die weitere Ausgestaltung bestehen im Rahmen der Erfindung mehrere Möglichkeiten, deren bevorzugte sich aus den Unteransprüchen ergeben. Von besonderer Bedeutung sind in diesem Zusammenhang die Maßnahmen der Patentansprüche 4 und 7, weil diese zu konstruktiv besonders leicht beherrschbaren Verhältnissen führen.

Im folgenden wird die Erfindung anhand einer ein Ausführungsbeispiel darstellenden Zeichnung erläutert. Es zeigen in schematischer Darstellung

Fig. 1    eine Dampfstoßform mit größtmöglichem Forminnenraum und

Fig. 2    den Gegenstand der Fig. 1 mit kleinstmöglichem Forminnenraum.

Die in den Figuren dargestellte Dampfstoßform dient zum Herstellen quaderförmiger Schaumstoffblöcke aus bläh- und versinterbaren Kunststoffteilchen, insbesondere vorgeschäumten Polystyrolteilchen nach dem sogenannten Dampfstoßverfahren. In ihrem grundsätzlichen Aufbau besteht die Dampfstoßform aus einem Formboden 1, zwei Längsseitenwänden 2, 3, zwei Stirnwänden 4, 5 und einer Formdecke 6. Der Formboden 1 und die Formdecke 6 sowie die Längsseitenwände 2, 3 und Stirnwände 4, 5 sind wie bei solchen Dampfstoßformen allgemein üblich zumindest teilweise als Hohlwandungen ausgeführt, deren zum Forminnenraum hin liegende Innenwandungen perforiert sind, was im einzelnen nicht dargestellt ist.

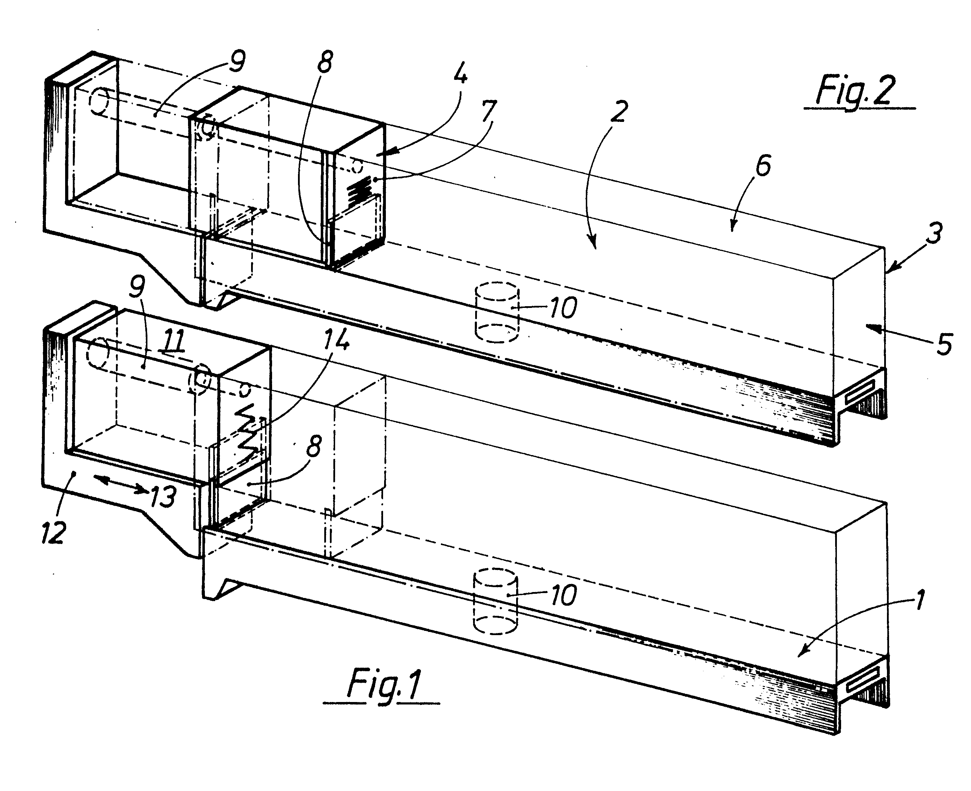

Der Formboden 1 weist der Formdecke 6 im wesentlichen entsprechende Abmessungen auf und ist zwischen den Längsseitenwänden 2, 3 begrenzt höhenverstellbar. Fig. 1 zeigt den im Querschnitt umgekehrt U-förmigen Formboden 1 in der unteren Endstellung und Fig. 2 in der oberen Endstellung. Außerdem ist eine der beiden Stirnwände 4 zwischen den beiden Längsseitenwänden 2, 3, dem Formboden 1 sowie der Formdecke 6 längsverstellbar. Die äußere Endstellung dieser längsverstellbaren Stirnwand 4 ist in Fig. 1 ausgezogen und die innere gestrichelt dargestellt; in Fig. 2 ist die Darstellung umgekehrt. Jedenfalls ist die längsverstellbare Stirnwand 4 aus einer oberen Basiswandung 7, die höchstens die Mindeststirnfläche aufweist und einem daran höhenverstellbar gelagerten unteren Ausgleichswandungsteil 8 aufgebaut.

Im einzelnen nur angedeutet ist, daß der längsverstellbaren Stirnwand 4 und/oder dem Formboden 1 jeweils ein Verstellantrieb 9 bzw. 10 zugeordnet ist. Zweckmäßigerweise greift der der längsverstellbaren Stirnwand 4 zugeordnete Verstellantrieb 9 an der Basiswandung 7 an. Die Basiswandung 7 besteht aus der Stirnwandung eines Kastens 11, welcher auf einem L-förmigen Führungs- und Halterungsteil 12 verschiebbar gelagert ist. Auch der Formboden 1 ist an diesem Führungs- und Halterungsteil 12 geführt, welcher die Dampfzu- und -ableitung 13 beherbergt. Damit sich die längsverstellbare Stirnwand 4 sebsttätig der Größe anpaßt, die aufgrund der Stellung des Formbodens 1 erforderlich ist, ist das Ausgleichswandungsteil 8 durch eine Federanordnung 14 gegen den Formboden 1 gedrückt. Im übrigen erkennt man in den Figuren, daß das Ausgleichswandungsteil 8 in der Basiswandung 7 gelagert ist.

— 4 —

Patentansprüche:

1. Form zum Herstellen quaderförmiger Schaumstoffblöcke, insbesondere aus vorgeschäumten Polystyrolteilchen mit Wasserdampf, bestehend aus einem Formboden, zwei Längsseitenwänden, zwei Stirnwänden und einer Formdecke, wobei der Formboden der Formdecke im wesentlichen entsprechende Abmessungen aufweist und zwischen den Längsseitenwänden begrenzt höhenverstellbar ist, d a d u r c h   g e k e n n z e i c h n e t, daß eine der beiden Stirnwände (4) zwischen den beiden Längsseitenwänden (2, 3), dem Formboden (1) sowie der Formdecke (6) längsverstellbar ist und aus einer höchstens die Mindeststirnwandfläche aufweisenden Basiswandung (7) sowie einem relativ dazu höhenverstellbaren Ausgleichswandungsteil (8) aufgebaut ist.

2. Form nach Anspruch 1, dadurch gekennzeichnet, daß der längsverstellbaren Stirnwand (4) und/oder dem Formboden (1) jeweils ein Verstellantrieb (9, 10) zugeordnet ist.

3. Form nach Anspruch 2, dadurch gekennzeichnet, daß der der längsverstellbaren Stirnwand (4) zugeordnete Verstellantrieb (9) an der Basiswandung (7) angreift.

4. Form nach einem der Ansprüche 1 bis 3, dadurch gekennzeichnet, daß die Basiswandung (7) aus der Stirnwandung eines Kastens (11) besteht, der auf einem L-förmigen Führungs- und Halterungsteil (12) verschiebbar gelagert ist.

- 5 -

5. Form nach Anspruch 4, dadurch gekennzeichnet, daß auch der Formboden (1) am Führungs- und Halterungsteil (12) geführt ist.

6. Form nach Anspruch 4 oder 5, dadurch gekennzeichnet, daß das Führungs- und Halterungsteil (12) eine Dampfzu- und -ableitung (13) beherbergt.

7. Form nach einem der Ansprüche 1 bis 6, dadurch gekennzeichnet, daß das Ausgleichswandungsteil (8) durch eine Federanordnung (14) gegen den Formboden (1) gedrückt ist.

8. Form nach einem der Ansprüche 1 bis 7, dadurch gekennzeichnet, daß das Ausgleichswandungsteil (8) in der Basiswandung (7) gelagert ist.

Fig.2

Fig.1

1/1

0187359